Europäisches Patentamt

European Patent Office

Office européen des brevets

(11) Veröffentlichungsnummer: **0 318 901 B1**

(12) **EUROPÄISCHE PATENTSCHRIFT**

(45) Veröffentlichungstag der Patentschrift: 27.12.91

(51) Int. Cl.⁵: **A01D 34/70**

(21) Anmeldenummer: **88119836.0**

(22) Anmeldetag: **28.11.88**

(54) **Rasenmäher.**

(30) Priorität: **03.12.87 DE 3741019**

(43) Veröffentlichungstag der Anmeldung:
**07.06.89 Patentblatt 89/23**

(45) Bekanntmachung des Hinweises auf die
Patenterteilung:
**27.12.91 Patentblatt 91/52**

(84) Benannte Vertragsstaaten:
**AT BE CH DE ES FR IT LI NL SE**

(56) Entgegenhaltungen:
**EP-A- 0 133 987**
**US-A- 3 974 631**
**US-A- 4 377 063**

(73) Patentinhaber: **Wolf-Geräte GmbH**
**Gregor-Wolf-Strasse 16 Postfach 860 und**
**880**
**W-5240 Betzdorf/Sieg(DE)**

(72) Erfinder: **Weid, Helmut**
**Am Koppelsberg 12**
**W-5241 Niederdreisbach(DE)**
Erfinder: **Eichling, Ulrich**
**Danziger Strasse 5**
**W-5240 Betzdorf(DE)**

(74) Vertreter: **Koch, Günther, Dipl.-Ing. Patentan-**
**wälte Wallach, Koch, Dr. Haibach, Feldkamp**
**et al**
**P.O. Box 121120**
**W-8000 München 12(DE)**

## Beschreibung

Die Erfindung betrifft einen handgeführten Rasenmäher, der im Oberbegriff des Patentanspruchs 1 angegebenen Gattung. Ein solcher Rasenmäher ist aus der EP-A-0 133 987 bekannt. Derartige, mit einem Grasfangbehälter unter den Führungsholmen ausgestattete Rasenmäher machen das nachträgliche Zusammenrechen des geschnittenen Grases überflüssig und sie behindern auch nicht die Manövrierfähigkeit des Rasenmähers, da keine seitlich über die Schnittbreite nach außen vorstehenden Teile vorhanden sind. Der gefüllte Grasfangbehälter kann auf einfache Weise vom Mäherchassis abgenommen und entleert werden. Schwierigkeiten können sich bei der Entleerung des Grasfangbehälters dann ergeben, wenn das geschnittene Gras naß ist und verklumpt und am Behälter haftet. Auch wird es gelegentlich als nachteilig empfunden, den relativ sperrigen und mit Gewicht behafteten Grasfangbehälter über oft nicht geringe Entfernungen zum Ablageplatz tragen zu müssen.

Der Erfindung liegt daher die Aufgabe zugrunde, einen gattungsgemäßen Rasenmäher hinsichtlich seiner Grasfangvorrichtung bedienungsfreundlich derart auszubilden, daß das geschnittene Gras mit geringem Zeitaufwand und geringer Anstrengung an einer Kompostierungsstelle abgelegt werden kann, ohne daß das Gras am Komposthaufen aus dem Behälter ausgeschüttet oder herausgeklaubt werden müßte.

Gelöst wird die gestellte Aufgabe durch die im Kennzeichnungsteil des Patentanspruchs 1 angegebenen Merkmale.

Dadurch, daß das Gras über entsprechende Leitvorrichtungen direkt in den Einwegbeutel gefördert wird, braucht der häufig gewichtsmäßig relativ schwere Grasfangbehälter nicht mehr durch Hand transportiert zu werden, weil der Einwegbeutel an Ort und Stelle auf einfache Weise aus dem rasfangbehälter entnommen und mittels des Gummibandes verschlossen und abgestellt werden kann. Die Beutel können einzeln oder nach Beendigung des Mähervorganges von der Rasenfläche eingesammelt und zur Kompostierung oder einem Müllbehälter gebracht werden.

Dadurch, daß der Einwegbeutel an der Mündung des Grasfangbehälters am Auslaßstutzen des Mäherchassis befestigt ist, kann der Einwegbeutel zusammen mit dem Grasfangbehälter vom Chassis abgenommen und aufrecht hingestellt werden, wobei mittels des Klemmbandes quasi selbsttätig der Beutel geschlossen wird, wenn die Beutelmündung von der Behältermündung abgezogen wird. Die Entnahme des Beutels aus dem Grasfangbehälter wird wesentlich dadurch erleichtert, daß der Grasfangbehälter mit einer Deckelöffnung an der der Mündung gegenüberliegenden Seite ausgestattet ist, weil dadurch der Beutel einfach nach unten herausfallen kann, was noch dadurch erleichtert wird, daß der Grasfangbehälter sich, wie allgemein üblich, in Strömungsrichtung erweitert.

Es ist zwar bereits durch die US-A-4 377 073 ein Rasenmäher bekannt, bei dem ein Einwegbeutel zur Aufnahme des Schnittgutes benutzt wird. Bei diesem bekannten Rasenmäher ist der Einwegbeutel mittels eines Klemmbandes an einem Grasaustrittsstutzen des Rasenmähers festgelegt, und es ist überhaupt kein Grasfangbehälter, wie beim gattungsgemäßen Rasenmäher, vorhanden. Es ist lediglich eine Haube vorgesehen, die zum Schutz der Bedienungsperson dienen soll, damit diese nicht von abgeschleuderten Gegenständen getroffen wird, die den Einwegbeutel durchdringen könnten. Diese Schutzhaube ist nicht nur an dem der Fördervorrichtung des Mäherchassis zugewandten Ende offen, sondern auch an der Unterseite und der Rückseite sind zusätzlich Schutzbleche angeordnet, die schwenkbar und abnehmbar am Mäherchassis festlegbar sind. Die Schutzhaube besteht aus einem Rohrrahmen, der auf der Rückseite, der Oberseite und den beiden Seitenflächen mit luftdurchlässigem Netzmaterial versehen ist. Die Haube ist aufklappbar, damit der gefüllte Einwegbeutel zugänglich wird und vom Rohrstutzen abgenommen werden kann. Die Schutzhaube selbst ist jedoch nicht vom Mäherchassis abnehmbar, und schon deshalb nicht als Grasfangbehälter geeignet. Würde bei dem bekannten Mäher der Mähvorgang ohne Einwegbeutel durchgeführt, dann würde sich das Gras auf dem unteren Abschlußblech innerhalb der Haube ansammeln und nach Hochschwenken der Haube würde das Schnittgut seitlich vom Bodenblech auf den Boden fallen und müßte dann wieder aufgesammelt werden.

Es hat sich gezeigt, daß durch das Einsetzen des erfindungsgemäßen Einwegbeutels in den Grasfangbehälter die Förderung des geschnittenen Grases, selbst wenn dieses nass ist, nicht beeinträchtigt wird.

Nachstehend wird ein Ausführungsbeispiel der Erfindung anhand der Zeichnung beschrieben. In der Zeichnung zeigen:

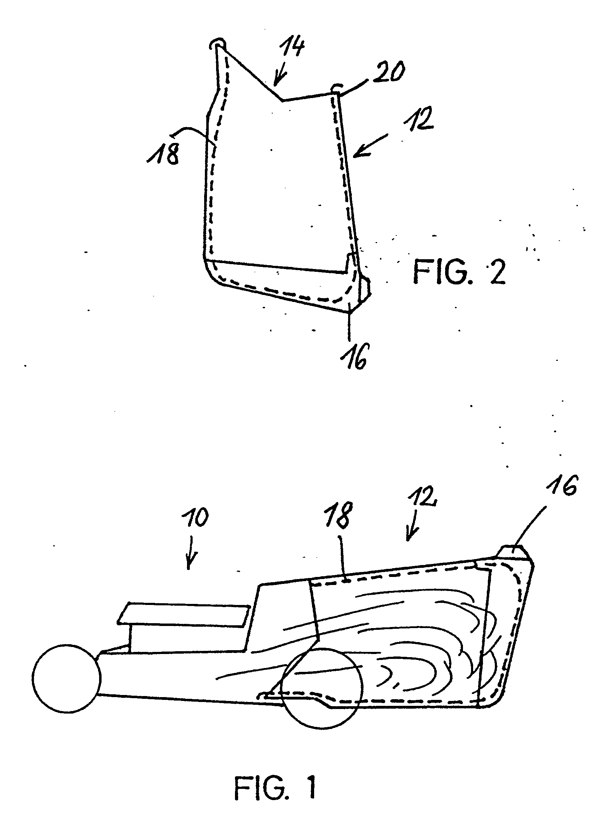

Figur 1 eine schematische Ansicht eines Rasermähers mit an der Rückseite angehängtem Grasfangbehälter und eingesetztem; Einwegbeutel

Figur 2 eine schematische Einzelansicht des Grasfangbehälters mit eingesetzten; Einwegbeutel,

Figur 3 eine Ansicht des Grasfangbehälters mit einer Möglichkeit der Entleerung des Schnittgutes.

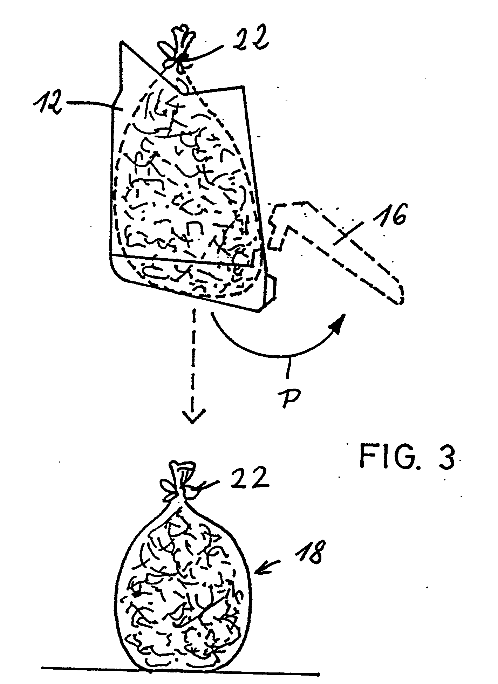

Die Zeichnung zeigt einen Rasenmäher (10), an dessen Rückseite unter dem nicht dargestellten Führungsbügel ein Grasfangbehälter (12) mit seinem offenen Mundstück (20) eingehängt ist. Das dem Mundstück (20) gegenüberliegende Ende des Fangbehälters (12) ist durch einen Deckel (16) abschließbar, die am Behälter einhängbar ist und durch Verschwenken in Richtung des Pfeiles (P) (Figur 3) geöffnet werden kann.

In den Grasfangbehälter (12) ist ein Einwegbeutel (18) einsetzbar, der in Form und Größe dem jeweils benutzten Fangbehälter angepaßt ist. Er wird am Mundstück (20) des Fangbehälters mit einer Klemmvorrichtung in Gestalt eines Gummibandes derart festgeklemmt, daß die Graseinlaßöffnung (14) erhalten bleibt und das Gras über diese Öffnung (14) direkt in den Einwegbeutel gefördert werden kann. Ein Verstopfen der Eintrittsöffnung (14) oder der Austrittsöffnung des Rasenmäherchassis ist damit nicht zu befürchten.

Nach der Füllung des Einwegbeutels (18) wird der Grasfangbehälter (12) vom Rasenmäher (10) abgenommen, und nach Öffnung der Verschlußklappe (16) wird gemäß Figur 3 der gefüllte und durch ein Gummiband oder einen Knebel verschlossene Einwegbeutels (18) insgesamt aus der hinteren Öffnung des Behälters entnommen.

## Patentansprüche

1. Handgeführter Rasenmäher (1) mit den folgenden Merkmalen:
   - das geschnittene Gut ist in einem erzeugten Luftstrom nach einem Auslaß des Mäherchassis förderbar;
   - ein Grasfangbehälter (12) ist hinten am Mäherchassis abnehmbar befestigt;
   - der Grasfangbehälter (12) weist ein vorderes Einlaufmundstück (20) zur Aufnahme des im Luftstrom durch den Auslaß geförderten Schnittgutes auf,
   gekennzeichnet durch:
   - in den Grasfangbehälter (12) ist ein Einwegbeutel (18) zur Aufnahme des Schnittgutes eingesetzt;
   - der Einwegbeutel (18) besteht aus leicht verrottenden Material;
   - der Einwegbeutel (18) ist mit seinem Öffnungsrand am Einlaufmundstück (20) des Grasfangbehälters (12) lösbar befestigt und mit diesem vom Mäherchassis abnehmbar;
   - die Befestigung des Einwegbeutels (18) erfolgt durch Festklemmen mittels eines gummielastischen Bandes (22) das gleichzeitig zum Verschließen des gefüllten Einwegbeutels (18) dient.

2. Rasenmäher nach Anspruch 1,
   dadurch gekennzeichnet, daß der Grasfangbehälter (12) an seiner dem Mundstück (20) gegenüberliegenden Seite mit einer durch einen Deckel (16) verschließbaren Entnahmeöffnung für den gefüllten Einwegbeutel (18) versehen ist.

3. Rasenmäher nach Anspruch 2,
   dadurch gekennzeichnet, daß der Deckel (16) am Grasfangbehälter (12) einhängbar ist und durch Verschwenken geöffnet werden kann.

## Claims

1. Hand-guided lawn-mower (1) with the following features:
   - the cut material can be transported to an outlet in the mower casing by means of a generated air current;
   - a grass collection container (12) is attached removably at the back of the mower casing;
   - the grass collection container (12) has an inlet mouth piece (20) fitted in front for receiving the cut material which is being transported through the outlet by means of the air current;
   characterized by:
   - a disposable bag (18) is inserted into the grass collection container (12) for receiving the cut material;
   - the disposable bag (18) is made from easily rotting material;
   - by means of its opening rim, the disposable bag (18) is releasably fixed to the inlet mouth piece (20) of the grass collection container (12) and can be removed together with the mower chassis;
   - fixing of the disposable bag (18) is achieved by clamping it with an elastic band (22) which is also used to seal the filled disposable bag (18).

2. Lawn-mower according to claim 1,
   characterized by the fact that an outlet opening for the filled disposable bag (18), which can be sealed with a lid (16), is provided at the side of the grass collection container (12) opposite to the inlet mouth piece (20).

3. Lawn-mower according to claim 2,
   characterized by the fact, that the lid (16) can be hung into the grass collection container, and that this lid can be opened through swinging.

## Revendications

1. Tondeuse à gazon (1) guidée à la main, présentant les caractéristiques ci-après :

- la matière coupée peut être acheminée derrière un orifice de sortie du châssis de la tondeuse, dans un courant d'air engendré ;
- un récipient de récolte pour l'herbe (12) est fixé, de manière amovible, à l'arrière du châssis de la tondeuse ;
- le récipient de récolte pour l'herbe (12) présente un orifice d'entrée avant (20) destiné à recevoir la matière coupée acheminée dans le courant d'air, à travers l'orifice de sortie,

caractérisée en ce que :
- dans le récipient de récolte pour l'herbe (12), est incorporé un sac à jeter (18) destiné à recevoir la matière coupée ;
- le sac à jeter (18) est constitué d'une matière facilement putrescible ;
- le sac à jeter (18) est fixé de manière amovible avec son bord d'ouverture, à l'orifice d'entrée (20) du récipient de récolte pour l'herbe (12) et on peut le retirer avec ce dernier à l'écart du châssis de la tondeuse ;
- la fixation du sac à jeter (18) a lieu par serrage, au moyen d'un ruban élastique (22) qui sert, en même temps, à la fermeture du sac rempli à jeter (18).

2. Tondeuse à gazon selon la revendication 1, **caractérisée en ce que** le récipient de récolte pour l'herbe (12) est muni, du côté opposé à l'orifice (20), d'une ouverture de retrait qui peut être fermée par un couvercle (16) et qui est destinée au sac rempli à jeter (18).

3. Tondeuse à gazon selon la revendication 2, **caractérisée en ce que le** couvercle (16) peut se suspendre au récipient de récolte pour l'herbe (12) et peut être ouvert par pivotement.

EP 0 318 901 B1

FIG. 2

FIG. 1

5

FIG. 3